Europäisches Patentamt

European Patent Office

Office européen des brevets

(19)

(11) **EP 1 232 291 B1**

(12) **FASCICULE DE BREVET EUROPEEN**

(45) Date de publication et mention
de la délivrance du brevet:
**01.10.2003 Bulletin 2003/40**

(21) Numéro de dépôt: **00988865.2**

(22) Date de dépôt: **21.11.2000**

(51) Int Cl.⁷: **C22C 16/00**, C22F 1/18

(86) Numéro de dépôt international:
**PCT/FR00/03234**

(87) Numéro de publication internationale:
**WO 01/038592 (31.05.2001 Gazette 2001/22)**

(54) **ALLIAGE A BASE DE ZIRCONIUM A FORTE RESISTANCE A LA CORROSION ET A L'HYDRURATION PAR L'EAU ET LA VAPEUR D'EAU ET PROCEDE DE TRANSFORMATION THERMOMECANIQUE DE L'ALLIAGE**

ZIRKONIUMLEGIERUNG MIT GUTEM WIDERSTAND GEGEN KORROSION UND HYDRIERUNG VON WASSER UND WASSERDAMPF UND VERFAHREN ZUR THERMOMECHANISCHEN-UMWANDLUNG DER LEGIERUNG

ZIRCONIUM ALLOY HIGHLY RESISTANT TO CORROSION AND TO SUN BURST BY WATER AND WATER VAPOUR AND METHOD FOR THERMOMECHANICAL TRANSFORMATION OF THE ALLOY

(84) Etats contractants désignés:
**AT BE CH CY DE DK ES FI FR GB GR IE IT LI LU MC NL PT SE TR**

(30) Priorité: **23.11.1999 FR 9914739**

(43) Date de publication de la demande:
**21.08.2002 Bulletin 2002/34**

(73) Titulaire: **Compagnie Européenne du Zirconium CEZUS**
**92400 Courbevoie (FR)**

(72) Inventeur: **CHARQUET, Daniel**
**F-73200 Albertville (FR)**

(74) Mandataire: **Bouget, Lucien et al**
**Cabinet Lavoix**
**2, Place d'Estienne d'Orves**
**75441 Paris Cédex 09 (FR)**

(56) Documents cités:
**EP-A- 0 154 559        EP-A- 0 802 264**
**EP-A- 0 949 349**

- **D. CHARQUET ET AL: "INFLUENCE OF SULFUR CONTENT ON THE THERMAL CREEP OF ZIRCONIUM ALLOY TUBES AT 400 C" JOURNAL OF NUCLEAR MATERIALS, vol. 255, no. 1, - mai 1998 (1998-05) pages 78-82, XP000937482**

**Description**

L'invention concerne un alliage à base de zirconium à forte résistance à la corrosion et à l'hydruration par l'eau et la vapeur d'eau et l'utilisation de cet alliage pour la fabrication d'éléments utilisés dans un réacteur nucléaire.

Les alliages de zirconium sont des matériaux connus pour réaliser des éléments subissant, en service, les conditions régnant à l'intérieur du coeur d'un réacteur nucléaire. En particulier, de tels éléments en alliage de zirconium sont utilisés dans les réacteurs nucléaires refroidis par de l'eau légère tels que les réacteurs à eau pressurisée (REP) et les réacteurs à eau bouillante (REB). Les alliages de zirconium sont également utilisés dans des réacteurs refroidis par de l'eau lourde tels que les réacteurs de type CANDU et WER. Les alliages de zirconium sont utilisés en particulier sous forme de tubes pour constituer des tubes-guides pour assemblage de combustible, des gaines de crayons de combustible qui sont remplies de pastilles de matériau combustible ou encore des gaines de grappes absorbantes. On utilise également le zirconium non allié pour réaliser des chemises de revêtement interne des gaines de crayons, appelé "liners". Les alliages de zirconium sont également utilisés pour la fabrication des tubes duplex comportant deux enveloppes tubulaires colaminées. Ces alliages sont également utilisés sous la forme de produits plats tels que des tôles ou des feuillards pour constituer des éléments de structure des assemblages de combustible pour réacteur nucléaire.

En service, tous ces éléments viennent en contact avec de l'eau à très haute pression et à haute température qui peut contenir des additifs tels que par exemple des composés de lithium et/ou avec de la vapeur d'eau.

Il est donc nécessaire que les matériaux utilisés pour réaliser ces éléments présentent une très bonne résistance à la corrosion par l'eau et la vapeur à haute température. Il est également nécessaire que de tels alliages présentent de très bonnes caractéristiques mécaniques à haute température et en particulier une très bonne tenue au fluage.

On a mentionné dans le FR-96-04739 correspondant au EP-0802.264 de la société CEZUS, différentes nuances d'alliage de zirconium telles que le Zircaloy 2, le Zircaloy 4, les alliages zirconium-niobium ou d'autres alliages qui ont été utilisés pour la réalisation d'éléments d'assemblages de combustible, en particulier pour des réacteurs refroidis à l'eau légère.

En plus de ces alliages de zirconium, on utilise également le zirconium non allié ou faiblement allié pour la fabrication de tubes-gaines qui sont utilisés dans les réacteurs à eau légère, comme chemisage interne d'éléments de combustible pour limiter la corrosion sous contrainte et augmenter la résistance à la corrosion et à l'hydruration par l'eau et la vapeur d'eau.

Tous ces matériaux, qu'il s'agisse de zirconium non allié ou d'alliages de zirconium pouvant renfermer des éléments d'addition tels que le fer, le chrome, le niobium, l'étain, le nickel, l'oxygène, le vanadium ou d'autres éléments, ont une teneur en zirconium au moins égale à 95 % en poids. Tous ces matériaux seront désignés dans la présente demande de brevet comme "alliages à base de zirconium".

Dans la demande de brevet de la société CEZUS mentionnée ci-dessus, on préconise des additions de soufre aux alliages de zirconium, dans une proportion pondérale comprise entre 8 et 100 ppm. De telles teneurs en soufre des alliages de zirconium, qui sont supérieures, de manière significative, aux teneurs résiduelles permettent en particulier d'améliorer sensiblement la tenue au fluage des alliages, dans des conditions de température telles que celles rencontrées dans un réacteur nucléaire refroidi par de l'eau sous pression ou par de l'eau bouillante.

On a montré que des teneurs très faibles en soufre, de l'ordre de quelques ppm permettent d'augmenter considérablement la tenue au fluage des alliages de zirconium, par exemple à une température de 400°C. On a d'autre part observé que cet effet bénéfique du soufre sur la tenue au fluage des alliages de zirconium parvenait très rapidement à un palier de saturation pour des teneurs en soufre relativement faibles et toujours inférieures à 100 ppm.

Dans le cas de la demande de brevet rappelée ci-dessus de la société CEZUS, on avait montré que des alliages de zirconium pouvant renfermer jusqu'à 100 ppm de soufre présentaient non seulement une tenue au fluage nettement améliorée mais encore une tenue à la corrosion dans l'eau et la vapeur d'eau à haute température acceptable ou éventuellement supérieure à la tenue à la corrosion d'alliages sans soufre.

Toutefois, cet effet bénéfique du soufre sur la tenue à la corrosion n'était observé que dans certains alliages de zirconium et pour des teneurs en soufre toujours inférieures à 100 ppm.

De nouvelles recherches ont montré que, de manière surprenante, les teneurs en soufre supérieures à 100 ppm peuvent permettre d'augmenter considérablement la tenue à la corrosion et à l'hydruration des alliages de zirconium dans l'eau et la vapeur d'eau, tout en préservant des propriétés d'aptitude au laminage satisfaisantes pourvu que le soufre se trouve sous forme dissoute et sous forme de fins précipités.

Dans le cas de la demande de brevet antérieure, les traitements thermiques auxquels étaient soumis les alliages, ces traitements étant définis par le paramètre $\Sigma A = t.\exp(-40000/T)$ où $t$ est le temps de traitement en heures et $T$ la température de traitement en degré Kelvin, avaient été choisis pour obtenir un compromis acceptable entre la tenue à la corrosion nodulaire et la tenue à la corrosion uniforme des alliages. Ce choix du cycle de traitement thermique ne permet généralement pas d'optimiser l'effet du soufre dans les alliages et de montrer que l'influence du soufre peut être bénéfique pour des teneurs supérieures à 100 ppm et en particulier, supérieures à 500 ppm.

Le but de l'invention est donc de proposer un alliage à base de zirconium à forte résistance à la corrosion par l'eau et la vapeur d'eau et à l'hydruration qui présente également de bonnes propriétés d'aptitude au laminage, en particulier à haute température.

Dans ce but, l'alliage suivant l'invention renferme, en poids, au moins 95 % de zirconium et de 0,05 à 0,1 % de soufre et le soufre est présent dans l'alliage à la fois à l'état dissous dans une proportion allant jusqu'à la limite de solubilité du soufre et, pour le reste, sous forme de fins précipités répartis uniformément dans la matrice de l'alliage et constitués, dans une proportion volumique d'au moins 90 %, par au moins un composé sulfuré de zirconium, les précipités du composé sulfuré de zirconium ayant une taille inférieure à 5 μm.

L'invention concerne également :

- un alliage à base de zirconium à forte résistance à la corrosion et à l'hydruration par l'eau et la vapeur d'eau renfermant en poids au moins 95 % de zirconium ainsi qu'éventuellement l'un au moins des éléments d'addition du groupe étain, fer, chrome, hafnium, niobium, nickel, vanadium, oxygène, caractérisé par le fait qu'il renferme de 0,05 à 0,1 % de soufre présent dans l'alliage, à la fois à l'état dissous dans une proportion allant jusqu'à la limite de solubilité du soufre et, pour le reste, sous forme de fins précipités répartis uniformément dans la matrice de l'alliage et constitués, dans une proportion volumique d'au moins 90 %, par au moins un composé sulfuré de zirconium, les précipités du composé sulfuré de zirconium ayant une taille inférieure à 5 μm, le reste de l'alliage étant constitué par des impuretés inévitables ;
- un alliage à base de zirconium selon le paragraphe précédent renfermant, en plus de l'un au moins des éléments d'addition du groupe étain, fer, chrome, hafnium, niobium, nickel, vanadium, oxygène, éventuellement l'un au moins des éléments d'addition du groupe carbone, silicium, phosphore, bismuth, tungstène ; et
- un procédé de transformation d'un produit en alliage suivant l'invention obtenu par coulée caractérisé par le fait qu'on réalise sur le produit coulé renfermant de 0,05 à 0,1 % de soufre une opération de transformation en phase $\alpha$ ou $\alpha + \beta$ à une température comprise entre 800 et 950°C pour éviter la coalescence des sulfures existant à l'état brut de solidification du produit coulé.

Afin de bien faire comprendre l'invention, on va décrire, à titre d'exemples, des alliages de zirconium constitués de zirconium et de soufre et éventuellement d'autres éléments d'addition et des essais de corrosion dans la vapeur et dans l'eau d'échantillons de ces alliages.

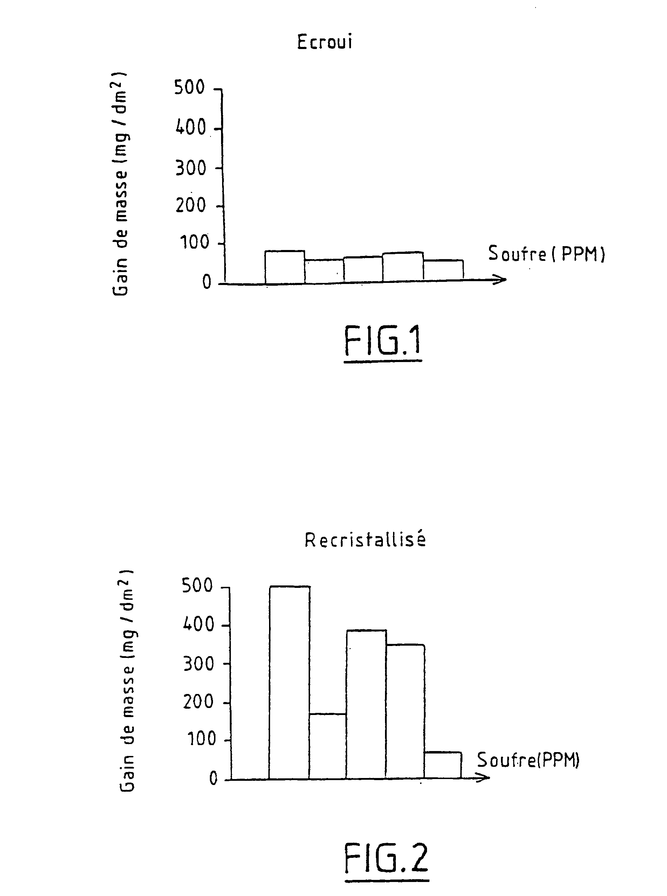

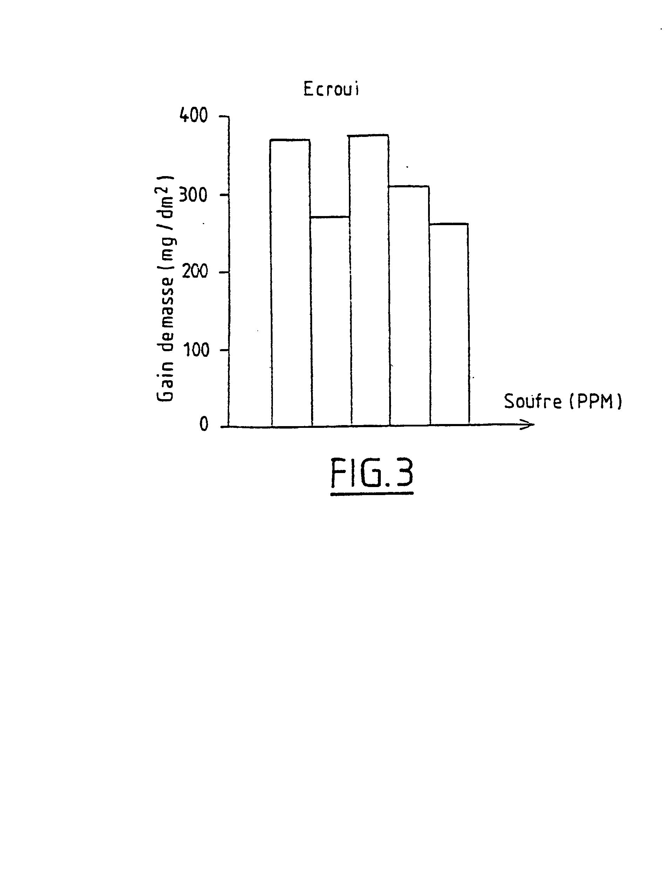

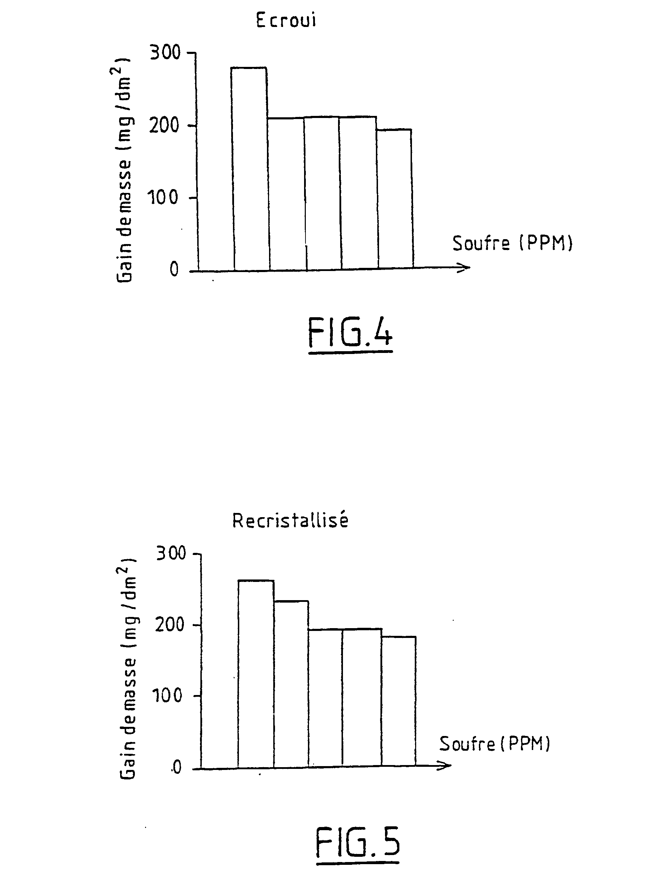

Les figures 1, 2, 3, 4 et 5 sont des histogrammes donnant les gains de masse d'échantillons du type Zircaloy 4 ayant différentes teneurs en soufre, au cours d'essais de corrosion dans la vapeur ou l'eau à haute température.

Pour montrer l'effet intrinsèque du soufre sur la tenue à la corrosion et à l'hydruration des alliages de zirconium, dans un premier temps, on a réalisé une série d'essais de corrosion dans la vapeur d'eau à haute température, sur des échantillons de zirconium non allié renfermant différentes teneurs en soufre. Ces différents essais constituent l'exemple 1 qui sera décrit ci-après.

De plus, de manière à déterminer l'effet de teneurs élevées en soufre (toutefois inférieures à 500 ppm) pouvant aller jusqu'à 400 ppm environ (0,04%), sur un alliage classique de zirconium (Zircaloy 4), on a effectué sur différents échantillons d'alliage ayant une composition du type Zircaloy 4 et des teneurs en soufre variables des essais de corrosion dans la vapeur d'eau et dans l'eau à haute température. Ces essais sont regroupés dans l'exemple 2 décrit ci-après.

Enfin, on a étudié les conditions de mise en solution du soufre et de formation de précipités dans différents alliages de zirconium, pour mettre au point des gammes de fabrication d'alliages de zirconium renfermant de fortes quantités de soufre sous forme de fins précipités uniformément répartis.

### Exemple 1

On a élaboré des échantillons de zirconium non allié renfermant des quantités variables de soufre, dans un intervalle allant de 6 à 1000 ppm. Le soufre a été ajouté sous forme de sulfure de zirconium. Des essais de corrosion ont été effectués dans de la vapeur d'eau à 400°C sous 105 bars, pendant des durées de 1 jour, 8 jours, 28 jours et 54 jours.

Dans le tableau 1 donné ci-dessous, on a porté dans la première colonne, la teneur en soufre des échantillons de zirconium utilisés pour les essais (en ppm).

## TABLEAU 1

| | S ppm | 400°C VAPEUR 105 bars | | | |
|---|---|---|---|---|---|
| | | 1 jour | 8 jours | 28 jours | 54 jours |
| Zirconium Non Allié | 6 | 413 | | | |
| | 12 | 289 | | | |
| | 16 | 338 | | | |
| | 26 | 303 | | | |
| | 63 | 120 | | | |
| | 71 | 92 | | | |
| | 92 | 65 | | | |
| | 165 | 15 | 22 | 30 | |
| | 218 | 13 | 21 | 28 | |
| | 361 | 13 | 21 | 28 | |
| | 849 | | 24 | | 28 |
| Zy4 | < 5 | 14 | 22 | 31 | 34 |

Dans les quatre colonnes suivantes, on a donné les gains de masse des échantillons, en mg/dm$^2$, à l'issue d'un maintien de l'échantillon dans la vapeur à 400°C d'une durée (en jours) indiquée en haut de la colonne.

La dernière ligne du tableau 1 est relative à un échantillon comparatif en Zircaloy 4, c'est-à-dire un alliage de zirconium renfermant principalement de l'étain, du fer et du chrome et dont la teneur en soufre est inférieure à 5 ppm.

Comme il apparaît sur le tableau, le soufre dans une proportion aussi élevée que 849 ppm présente un effet bénéfique très important sur la tenue à la corrosion dans de la vapeur à 400°C. Au-dessus de 165 ppm, le soufre peut conduire à des tenues à la corrosion du zirconium non allié qui sont sensiblement égales ou supérieures à la tenue à la corrosion du Zircaloy 4, pour des durées d'exposition à la vapeur d'eau à 400°C de 1, 8, et 54 jours.

Les échantillons de zirconium contenant du soufre ont subi un recuit à une température de stabilité de la phase $\alpha + \beta$. Par exemple, l'échantillon à 849 ppm de soufre porté dans le tableau 1 a été laminé et recuit à une température de 850°C $\pm$ 20°C qui est la limite du domaine $\alpha + \beta$. Le maintien en température lors du recuit permet, dans le cas des échantillons comportant de fortes teneurs en soufre (supérieures à 100 ppm), d'éviter la coalescence des sulfures, de sorte que les précipités soient uniformément distribués.

Du fait que la solubilité du soufre dans la phase $\alpha$ du zirconium est faible (de l'ordre de 10 à 30 ppm), les échantillons contenant des proportions de soufre supérieures à la limite de solubilité renferment des sulfures précipités dont les essais mentionnés au tableau 1 ont montré qu'ils étaient favorables pour la tenue à la corrosion de l'alliage.

Les expériences relatives au zirconium non allié renfermant du soufre ont donc montré que de fins précipités de sulfure, constitués dans une proportion volumique d'au moins 90 % par $Zr_9S_2$, ont un effet tout à fait favorable sur la tenue à la corrosion dans la vapeur d'eau à 400°C.

### Exemple 2

Dans le cas d'alliages de zirconium utilisés de manière habituelle pour la réalisation d'éléments en contact avec de l'eau ou de la vapeur d'eau à haute température tels que le Zircaloy 4 ou le Zircaloy 2 qui sont des alliages renfermant en particulier du fer et du chrome, on sait que la précipitation de composés intermétalliques tels que Zr $(CrFe)_2$ a une influence bénéfique sur la tenue à la corrosion.

Cependant, dans le cas des composés intermétalliques des alliages connus, qui peuvent renfermer par exemple du fer, du chrome, du nickel, du niobium, du vanadium ou de l'oxygène, on sait que les composés intermétalliques ont une influence plus ou moins favorable suivant la taille des précipités formés dans l'alliage.

Dans le cas où l'on recherche une tenue à la corrosion uniforme et à la corrosion dans l'eau à haute pression et à haute température (milieu du PWR), on recherche des alliages renfermant des précipités de composés intermétalliques présentant de préférence une taille importante.

Au contraire, dans le cas où l'on recherche une tenue à la corrosion nodulaire et une tenue à la corrosion dans de l'eau à l'ébullition (milieu du BWR), il est préférable d'obtenir dans l'alliage des précipités de composés intermétalliques de petite taille.

Les recherches effectuées sur le zirconium non allié renfermant du soufre ont montré qu'il n'est pas possible de transposer ces résultats au cas des sulfures précipités dans les alliages de zirconium en général.

Dans le cas des précipités de sulfure, la tenue à la corrosion et à l'hydruration demande une distribution uniforme des précipités.

On a effectué divers essais sur des échantillons en un alliage de zirconium du type Zircaloy 4 renfermant différentes teneurs en soufre, ces teneurs étant comprise entre la teneur résiduelle (< 5 ppm) et à peu près 400 ppm.

Pour effectuer les essais, on a élaboré différents échantillons dont les compositions sont indiquées au tableau 2.

TABLEAU 2

| Alliages base Zy4 à teneur en soufre variable | | | | | |
|---|---|---|---|---|---|
| Éléments | Alliage 1 | Alliage 2 | Alliage 3 | Alliage 4 | Alliage 5 |
| S (ppm) | < 5 | 90 | 210 | 270 | 380 |
| Sn (%) | 1,44 | 1,44 | 1,43 | 1,44 | 1,44 |
| Fe (%) | 0,23 | 0,23 | 0,22 | 0,23 | 0,23 |
| Cr (%) | 0,11 | 0,11 | 0,11 | 0,11 | 0,11 |
| C (ppm) | 156 | 152 | 151 | 153 | 154 |
| O (%) | 0,14 | 0,14 | 0,14 | 0,14 | 0,14 |
| Si (ppm) | 96 | 95 | 91 | 91 | 95 |

Les alliages de type Zircaloy 4 renferment comme éléments d'addition de 1,2 à 1,7 % en poids d'étain, de 0,18 à 0,24 % en poids de fer et 0,07 à 0,13 % de chrome ainsi que de 0,08 à 0,2 % d'oxygène, le reste de l'alliage étant constitué essentiellement par du zirconium, dans une proportion pondérale d'au moins 50 %, et par des impuretés inévitables.

Les cinq coulées d'alliage type Zircaloy 4 utilisées pour les essais comportent des teneurs en soufre qui s'échelonnent approximativement entre une teneur résiduelle inférieure à 5 ppm et 380 ppm.

La gamme de fabrication des échantillons utilisés pour les essais est la suivante :

- fusion de la charge dans un four à lévitation,
- coulée d'un lingot,
- forgeage à chaud (800°C pendant 1 heure) du lingot pour passer de l'épaisseur de départ d'environ 45 mm à une ébauche d'épaisseur d'environ 22 mm,
- recuit de mise en solution en phase β (1030°C pendant une heure) sur l'ébauche de 22 mm d'épaisseur,
- refroidissement dans l'eau froide de l'ébauche après recuit de mise en solution,
- laminage à chaud à 750°C de l'ébauche jusqu'à une épaisseur de 4,6 mm,
- traitement au four de 15 minutes à 750°C,
- laminage à froid de plaquettes jusqu'à environ 2,2 mm d'épaisseur pour obtenir une première série d'échantillons qui seront soumis aux essais de corrosion,
- recuit sous vide (700°C pendant deux heures) d'une partie des échantillons pour réaliser une seconde série d'essais de corrosion.

On a noté que pour les teneurs les plus chargées en soufre, l'aptitude au laminage est excellente. Les examens micrographiques effectués ont montré que le métal n'avait subi aucune décohésion.

Les échantillons de la première série d'échantillons qui sont obtenus directement par laminage à froid sont désignés comme échantillons écrouis et les échantillons de la deuxième série d'échantillons soumis au recuit sous vide seront désignés comme échantillons recristallisés.

Pendant le traitement au four à 750°C, après le laminage à chaud, les échantillons ont un temps total de présence dans le four de l'ordre de 1 heure 30, de sorte que le paramètre définissant le temps total de maintien en température des échantillons est :

$$\Sigma A = 1{,}57 \times 10^{-17} h.$$

Pour les échantillons recristallisés, c'est-à-dire soumis au recuit sous vide, le paramètre représentatif du temps de maintien en température est :

$$\Sigma A = 1{,}85 \times 10^{-17} h.$$

Sur le tableau 3, on a porté les résultats d'essais de corrosion sur cinq échantillons à l'état écroui et sur cinq échantillons à l'état recristallisé correspondant aux nuances du tableau 2.

TABLEAU 3

| N° de l'alliage | Teneur en soufre | Corrosion à 500°C pendant 24 heures | | Corrosion à 400°C (mg/dm$^2$) | Corrosion à 360°C Li 70 ppm 364 jours | |
|---|---|---|---|---|---|---|
| | | Gain de masse O$_2$ (mg/dm$^2$) | Pick-up H$_2$ (%) | 294 jours | Gain de masse (mg/dm$^2$) | Pick-up H$_2$ (%) |
| Tôle de 2.2 mm écroule | | | | | | |
| 1 | < 5 | 76.84 | 32.91 | 372.5 | 276.3 | 11 |
| 2 | 94 | 54.93 | 27.83 | 275.3 | 213.5 | 11 |
| 3 | 212 | 59.12 | 21.31 | 397.3 | 212.7 | 12 |
| 4 | 271 | 67.18 | 10.00 | 313.1 | 209.6 | 7 |
| 5 | 381 | 51.60 | 22.94 | 248.0 | 192.4 | 7 |
| Tôle de 2.2 mm recuite (700°C - 2 h) | | | | | | |
| 1 | < 5 | 496.47 | | | 262.3 | 12 |
| 2 | 94 | 173.46 | | | 234.4 | 11 |
| 3 | 212 | 386.89 | | | 190.5 | 11 |
| 4 | 271 | 353.02 | | | 188.2 | 8 |
| 5 | 381 | 69.64 | | | 176.2 | 6 |

Les échantillons sont prélevés dans tous les cas dans une tôle de 2,2 mm d'épaisseur obtenue par laminage à froid, selon la gamme de fabrication décrite ci-dessus.

On a effectué sur les deux séries de cinq échantillons renfermant des teneurs en soufre croissantes des essais de corrosion à 500°C dans la vapeur pendant 24 heures, des essais de corrosion à 400°C dans la vapeur pendant une durée de 294 jours et des essais de corrosion à 360°C dans l'eau sous pression renfermant 70 ppm de lithium, pendant une durée de 364 jours.

Dans la première colonne du tableau 3, on a porté les numéros d'échantillons, (à l'état écroui et à l'état recristallisé).

Dans la seconde colonne du tableau, on a porté les teneurs en soufre des différents échantillons en ppm.

Dans les colonnes 3 et 4 du tableau 3, on a porté le gain de masse, en oxygène des échantillons dans la vapeur à 500°C et la prise d'hydrogène désignée par "pick-up hydrogène".

Dans la colonne 5 du tableau 3, on a porté les gains de masse des échantillons, lors d'essais de corrosion dans la vapeur à 400°C pendant 294 jours.

Dans les colonnes 6 et 7 du tableau 3, on a porté les gains de masse et la prise hydrogène des échantillons soumis à dès essais de corrosion dans l'eau sous pression à 360°C renfermant 70 ppm de lithium, pendant 364 jours.

Les gains de masse des échantillons sont exprimés en mg/dm$^2$.

De plus, sur les figures 1, 2, 3,4 et 5, on a représenté sous la forme d'histogrammes les gains de masse des échantillons à l'état écroui et à l'état recuit, lors de certains essais de corrosion dans la vapeur et dans l'eau.

Sur les figures 1 et 2, on a représenté les gains de masse des échantillons respectivement à l'état écroui et à l'état recristallisé,lors d'essais dans la vapeur à 500°C pendant 24 heures.

Sur la figure 3, on a représenté les gains de masse des échantillons à l'état écroui lors d'essais dans la vapeur à 400°C pendant 294 jours.

Sur les figures 4 et 5, on a représenté les gains de masse des échantillons respectivement à l'état écroui et à l'état recristallisé lors d'essais de corrosion dans l'eau renfermant 70 ppm de lithium à 360°C, pendant 364 jours.

De manière générale, les résultats portés au tableau 3 et sur les figures 1, 2, 3,4 et 5 montrent que le soufre, dans des proportions importantes, supérieures à 100 ppm, et jusqu'à 400 ppm, a une influence bénéfique sur la tenue à la corrosion et à l'hydruration d'échantillons en alliage de zirconium du type Zircaloy 4.

De manière générale, les échantillons à l'état recristallisé résistent mieux que les échantillons à l'état écroui, lors d'essais de corrosion dans la vapeur d'eau à 400°C et dans l'eau à 360°C. En revanche, les alliages de type Zircaloy 4 à l'état recristallisé résistent moins bien à la corrosion par la vapeur à 500°C que les alliages à l'état écroui. Comme il apparaît sur les figures 1 et 2, le soufre ne semble pas avoir d'effet notable sur la tenue à la corrosion dans la vapeur à 500°C des alliages écrouis alors qu'il semble avoir un effet favorable sur la tenue à la corrosion dans la vapeur à 500°C pour les alliages recristallisés.

Comme dans le cas du zirconium non allié, l'effet favorable du soufre est lié à la formation de phases précipitées comprenant du soufre avec des tailles, répartitions et proportions des précipités analogues. En effet, pour des teneurs en soufre suffisamment importantes, par exemple supérieures à 20 ou 30 ppm, il se forme des précipités de composés contenant du soufre répartis dans la matrice métallique de l'alliage de zirconium.

Dans le cas des alliages de type Zircaloy 4, la phase précipitée contenant du soufre est principalement constituée du composé $Zr_2SC$. Du fait qu'il est connu que les carbures précipités ont une influence néfaste sur la tenue à la corrosion, l'effet favorable du soufre est lié au fait que la phase précipitée conjugue à l'effet néfaste du carbone l'effet bénéfique du soufre, l'effet bénéfique du soufre étant prépondérant.

Dans le cas du zirconium non allié et dans le cas des alliages de zirconium contenant du soufre, la nature, la taille et la répartition des phases précipitées contenant du soufre se sont avérées comme très importantes pour l'obtention de bonnes propriétés de résistance à la corrosion et à l'hydruration dans l'eau et la vapeur d'eau.

La nature, la taille et la répartition des phases précipitées dépendent en particulier des éléments d'addition des alliages et des gammes de traitements effectués.

Structure et gammes de traitements des alliages de zirconium contenant du soufre.

Pour tous les alliages de zirconium envisagés dans la présente demande de brevet, c'est-à-dire des alliages contenant au moins 95 % de zirconium en poids, la solubilité du soufre dans la phase $\alpha$ est faible et généralement inférieure à 30 ppm.

Dans le cas du zirconium non allié ultra pur, la solubilité du soufre dans la phase $\beta$ est nettement plus élevée qu'en phase $\alpha$ et a pu être déterminée à des niveaux de :

- 120 ppm à 900°C,
- 200 ppm à 950°C,
- 280 ppm à 1000°C,
- 360 ppm à 1050°C,
- 440 ppm à 1100°C.

Ces données doivent être prises en compte pour déterminer les gammes de traitement souhaitables des alliages de zirconium renfermant de fortes proportions de soufre (supérieures à 500 ppm).

Suivant les teneurs en soufre ajoutées dans les alliages de zirconium, on utilisera l'une ou l'autre de deux gammes de traitements qui sont indiquées ci-dessous.

Une première gamme correspond à une mise en solution en phase $\beta$ suivie d'une trempe à un stade intermédiaire ; la poursuite de la gamme se faisant en $\alpha$.

Le traitement de mise en solution permet de solubiliser les sulfures, en choisissant une température supérieure à la limite de solubilité.

Une seconde gamme de traitements qui comporte une transformation thermomécanique du lingot en alliage de zirconium renfermant du soufre en phase $\alpha + \beta$ ou en phase $\alpha$ à une température comprise entre 800 et 950°C, par exemple de l'ordre de 850°C permet d'éviter la coalescence des sulfures existant à l'état brut de solidification dans le lingot.

Cette gamme de traitements doit être utilisée dans le cas de fortes teneurs en soufre, c'est-à-dire dans le cas de teneurs en soufre supérieures à 500 ppm.

En utilisant cette gamme de traitements, pour des alliages de zirconium selon l'invention, pouvant contenir de 500 à 1000 ppm de soufre, on évite la formation de précipités de sulfure ou autre composé sulfuré d'une taille importante, par exemple d'une taille supérieure à 5 μm.

Les alliages suivant l'invention, lorsqu'on contrôle la formation des précipités contenant du soufre, présentent des propriétés nettement améliorées de tenue à la corrosion et à l'hydruration par l'eau et la vapeur à haute température.

On a également montré que ni l'aptitude à la transformation à froid ni la tenue au fluage des alliages contenant du soufre ne sont affectées.

Les alliages selon l'invention peuvent être utilisés pour la fabrication de nombreux éléments d'assemblages de combustible et en particulier des éléments de forme tubulaire tels que des gaines de crayons de combustible ou des tubes-guides, en particulier des gaines composites réalisées sous forme duplex ou cofilée, des liners, des barres à bouchons, des éléments réalisés à partir de plaquettes ou de tôles pour des réacteurs de type BWR ou PWR.

L'invention ne se limite pas strictement au mode de réalisation qui ont été décrits.

De manière générale, l'invention qui est définie à la revendication 1 concerne tout alliage de zirconium renfermant au moins 95 % en poids de zirconium, quels que soient les éléments d'addition introduits dans ces alliages.

**Revendications**

1. Alliage à base de zirconium à forte résistance à la corrosion et à l'hydruration par l'eau et la vapeur d'eau, renfermant en poids au moins 95 % de zirconium et de 0,05 à 0,1 % de soufre présent dans l'alliage, à la fois à l'état dissous dans une proportion allant jusqu'à la limite de solubilité du soufre et, pour le reste, sous forme de fins précipités répartis uniformément dans la matrice de l'alliage et constitués, dans une proportion volumique d'au moins 90 %, par au moins un composé sulfuré de zirconium, les précipités du composé sulfuré de zirconium ayant une taille inférieure à 5 μm.

2. Alliage suivant la revendication 1, **caractérisé par le fait que** le composé sulfuré de zirconium est le sulfure de zirconium $Zr_9S_2$.

3. Alliage suivant la revendication 2, **caractérisé par le fait que** le sulfure de zirconium $Zr_9S_2$ représente une proportion volumique d'au moins 90 % des précipités.

4. Alliage à base de zirconium suivant la revendication 1 renfermant en poids au moins 95 % de zirconium ainsi qu'éventuellement l'un au moins des éléments du groupe constitué par l'étain, le fer, le chrome, l'hafnium, le niobium, le nickel, le vanadium, l'oxygène, ledit alliage renfermant aussi de 0,05 à 0,1 % de soufre présent dans l'alliage, à la fois à l'état dissous dans une proportion allant jusqu'à la limite de solubilité du soufre et, pour le reste, sous forme de fins précipités répartis uniformément dans la matrice de l'alliage et constitués, dans une proportion volumique d'au moins 90 %, par au moins un composé sulfuré de zirconium, les précipités du composé sulfuré de zirconium ayant une taille inférieure à 5 μm, le reste de l'alliage étant constitué par des impuretés inévitables.

5. Alliage à base de zirconium à forte résistance à la corrosion et à l'hydruration par l'eau et la vapeur d'eau selon la revendication 4, renfermant, en plus de l'un au moins des éléments du groupe constitué par l'étain, le fer, le chrome, l'hafnium, le niobium, le nickel, le vanadium, l'oxygène, éventuellement l'un au moins des éléments d'addition du groupe constitué par le carbone, le silicium, le phosphore, le bismuth, le tungstène.

6. Alliage suivant la revendication 5 renfermant en poids de 1,2 à 1,7 % d'étain, de 0,18 à 0,24 % de fer, de 0,07 à 0,13 % de chrome et de 0,08 % à 0,2 % d'oxygène, le reste de l'alliage étant constitué par du zirconium, dans une proportion pondérale d'au moins 95 % et par des impuretés inévitables, **caractérisé par le fait que** le composé sulfuré de zirconium est $Zr_2SC$.

7. Procédé de transformation thermomécanique d'un produit en alliage de zirconium suivant l'une quelconque des revendications 1 à 6 obtenu par coulée, **caractérisé par le fait qu'**on réalise sur le produit coulé renfermant de 0,05 à 0,1 % de soufre une opération de transformation en phase $\alpha$ ou $\alpha + \beta$ à une température comprise entre 800 et 950°C pour éviter la coalescence des sulfures existant à l'état brut de solidification du produit coulé.

8. Utilisation d'un alliage suivant l'une quelconque des revendications 1 à 7 pour la fabrication d'un élément parmi les éléments suivants : gaine de crayon de combustible, gaine duplex, liner, tube-guide, pour un assemblage de combustible nucléaire, barre à bouchons, éléments réalisés à partir de plaquettes ou de tôles pour réacteurs BWR ou PWR.

**Patentansprüche**

1. Legierung auf Zirkoniumbasis mit einer hohen Beständigkeit gegen Korrosion und gegen Hydrierung durch Wasser und Wasserdampf, die, in Gew.-%, enthält
mindestens 95 % Zirkonium und
0,05 bis 0,1 % Schwefel, der in der Legierung gleichzeitig in einem gelösten Zustand in einem Mengenanteil, der bis zur Löslichkeitsgrenze des Schwefels gehen kann, und zum Rest in Form von feinen Präzipitaten vorliegt, die gleichmäßig in der Legierungsmatrix verteilt sind und bestehen zu einem Volumenanteil von mindestens 90 % aus mindestens einer schwefelhaltigen Zirkoniumverbindung, wobei die Präzipitate aus der schwefelhaltigen Zirkoniumverbindung eine Teilchengröße von < 5 um haben.

2. Legierung nach Anspruch 1, **dadurch gekennzeichnet, dass** es sich bei der schwefelhaltigen Zirkoniumverbindung um Zirkoniumsulfid $Zr_9S_2$ handelt.

3. Legierung nach Anspruch 2, **dadurch gekennzeichnet, dass** das Zirkoniumsulfid $Zr_9S_2$ einen Volumenanteil von mindestens 90 % der Präzipitate darstellt.

4. Legierung auf Zirkoniumbasis nach Anspruch 1, die, in Gew.-%, enthält mindestens 95 % Zirkonium sowie gegebenenfalls ein oder mehrere Elemente aus der Gruppe, die besteht aus Zinn, Eisen, Chrom, Hafnium, Niob, Nickel, Vanadin, Sauerstoff, und
0,05 bis 0,1 % Schwefel, der in der Legierung gleichzeitig in gelöster Form in einem Mengenanteil, der bis zu der Löslichkeitsgrenze des Schwefels gehen kann, und zum Rest in Form von feinen Präzipitaten vorliegt, die in der Legierungsmatrix gleichmäßig verteilt sind und bestehen zu einem Volumenanteil von mindestens 90 % aus mindestens einer schwefelhaltigen Zirkoniumverbindung, wobei die Präzipitate aus der schwefelhaltigen Zirkoniumverbindung eine Teilchengröße von < 5 um haben und der Rest der Legierung aus unvermeidlichen Verunreinigungen besteht.

5. Legierung auf Zirkoniumbasis mit einer hohen Beständigkeit gegen Korrosion und gegen Hydrierung mit Wasser und Wasserdampf nach Anspruch 4, die außerdem mindestens eines der Elemente aus der Gruppe enthält, die besteht aus Zinn, Eisen, Chrom, Hafnium, Niob, Nickel, Vanadin, Sauerstoff, gegebenenfalls mindestens eines der Zusatzelemente aus der Gruppe, die besteht aus Kohlenstoff, Silicium, Phosphor, Wismut, Wolfram.

6. Legierung nach Anspruch 5, die, in Gew.-%, enthält
1,2 bis 1,7 % Zinn
0,18 bis 0,24 % Eisen
0,07 bis 0,13 % Chrom und
0,08 bis 0,2 % Sauerstoff,
wobei der Rest der Legierung besteht aus Zirkonium in einem Gewichtsmengenanteil von mindestens 95 % und aus unvermeidlichen Verunreinigungen,
**dadurch gekennzeichnet, dass** es sich bei der schwefelhaltigen Zirkoniumverbindung um $Zr_2SC$ handelt.

7. Verfahren zur thermomechanischen Umwandlung eines Produkts aus einer Zirkoniumlegierung nach einem der Ansprüche 1 bis 6, das durch Gießen erhalten worden ist, **dadurch gekennzeichnet, dass** man mit dem Gießprodukt, das 0,05 bis 0,1 % Schwefel enthält, eine Umwandlung in die $\alpha$- oder $\alpha + \beta$-Phase durchführt bei einer Temperatur zwischen 800 und 950 °C, um das Koaleszieren der Sulfide zu verhindern, die im Rohzustand der Verfestigung des Gießprodukts vorliegen.

8. Verwendung einer Legierung nach einem der Ansprüche 1 bis 7 zur Herstellung eines Bauteils unter den folgenden Bauteilen: Brennstab-Umhüllung, Duplex-Umhüllung, Liner, Führungsrohr, zur Herstellung einer Brennstab-Kassette, einer Abschlussstange, von Baukörpern, hergestellt aus Platten oder Blechen für BWR- oder PWR-Reaktoren.

**Claims**

1.  An alloy based on zirconium with high resistance to corrosion and to hydrogenation by water and water vapour, containing at least 95 wt.% of zirconium and 0.05 to 0.1 wt.% of sulfur, some of this being present in the alloy in the dissolved state, in a proportion up to the solubility limit for sulfur, with the remainder being in the form of fine precipitated particles distributed uniformly in the alloy matrix, of which at least 90 vol.% consists of a sulfurated zirconium compound, the particles of precipitated sulfurated zirconium compound having a size less than 5 $\mu$m.

2.  An alloy according to Claim 1, **characterised in that** the sulfurated zirconium compound is the zirconium sulfide $Zr_9S_2$.

3.  An alloy according to Claim 2, **characterised in that** the zirconium sulfide $Zr_9S_2$ represents a proportion of at least 90 vol.% of the precipitated particles.

4.  An alloy based on zirconium according to Claim 1, containing at least 95 wt.% of zirconium and also optionally at least one of the elements from the group comprising tin, iron, chromium, hafnium, niobium, nickel, vanadium, oxygen, said alloy also containing 0.05 to 0.1 % of sulfur, some of this being present in the alloy in the dissolved state, in a proportion up to the solubility limit for sulfur, with the remainder being in the form of fine precipitated particles distributed uniformly in the alloy matrix, of which at least 90 vol.% consists of a sulfurated zirconium compound, the particles of precipitated sulfurated zirconium compound having a size less than 5 $\mu$m, the remainder of the alloy consisting of unavoidable impurities.

5.  An alloy based on zirconium with high resistance to corrosion and to hydrogenation by water and water vapour in accordance with Claim 4, containing, in addition to at least one of the elements from the group comprising tin, iron, chromium, hafnium, niobium, nickel, vanadium, oxygen, optionally at least one of the addition elements from the group comprising carbon, silicon, phosphorus, bismuth, tungsten.

6.  An alloy according to Claim 5 containing 1.2 to 1.7 wt.% of tin, 0.18 to 0.24 wt.% of iron, 0.07 to 0.13 wt.% of chromium and 0.08 to 0.2 wt.% of oxygen, the remainder of the alloy consisting of zirconium, to a proportion of at least 95 wt.%, and unavoidable impurities, **characterised in that** the sulfurated zirconium compound is $Zr_2SC$.

7.  A process for the thermomechanical transformation of a product made of a zirconium alloy according to any of Claims 1 to 6 obtained by casting, **characterised in that** a transformation operation is performed on the cast product, containing 0.05 to 0.1 % of sulfur, in the $\alpha$ or $\alpha+\beta$ phase at a temperature between 800 and 950°C in order to avoid coalescence of the sulfur present in the crude solidified state of the cast product.

8.  Use of an alloy according to any of Claims 1 to 7 to produce an element from among the following elements: fuel rod casing, duplex casing, liner, tube guide, for a nuclear fuel assembly, plug rods, elements made from slices or sheets of metal for BWR or PWR reactors.

Ecroui

FIG.1

Recristallisé

FIG.2

Ecroui

FIG.3

Ecroui

FIG.4

Recristallisé

FIG.5